# EUROPEAN PATENT SPECIFICATION

(11) **EP 4 139 407 B1**
(45) Date of publication and mention of the grant of the patent: **09.12.2026**
(21) Application number: 21719156.8
(22) Date of filing: 20.04.2021
(51) Int. Cl.: A01N 43/36, B42D 25/29, C08K 5/3415, C08K 9/10, B42D 25/36, C08K 5/00, C09D 5/14, C09D 7/63

(54) **VARNISH**
LACK
VERNIS

(30) Priority: 21.04.2020 EP 20170671
(43) Date of publication of application: 01.03.2023
(73) Proprietor: Unilever IP Holdings B.V., 6708 WH Wageningen (NL); Unilever Global IP Limited, Wirral, Merseyside CH62 4ZD (GB)
(72) Inventor: KOTSAKIS, Panagiotis, 145 76 Athens (GR); PARRY, Neil, James, Wirral Merseyside CH63 3JW (GB)
(74) Representative: Unilever Patent Group
(86) International application number: PCT/EP2021/060214
(87) International publication number: WO 2021/214041

(56) References cited:
- WO-A1-2005/053684
- WO-A1-2008/097314
- WO-A1-2020/053105
- US-A1- 2005 215 772
- US-A1- 2018 228 151
- US-A1- 2019 352 259

## Description

### Field of Invention

The invention relates to a varnish. In particular to a varnish for a banknote.

### Background of the Invention

Money, in particular banknotes, is in continuous circulation, passing between many different people. This means that it can easily become contaminated with microorganisms, such as *Staphylococcus,* for example *S*. *aureus,* and *Pseudomonas,* for example P. *aeruginosa.* Banknotes can be varnished to increase the cleanliness of the banknote. However, while this may improve the cleanliness, it doesn't reduce the level of the microbes.

Prior art is known from WO 2008/097314.

There is thus a need for improved varnishes for banknotes and resulting varnished banknotes that have improved resistance to microorganisms, for example resulting in reduced levels of microorganisms on the banknotes and/or a more bio-film resistant banknote.

### Summary of the Invention

We have found that by incorporating a lactam into the varnish for the banknote, the resulting banknote has improved resistance to microorganisms.

The invention relates in a first aspect to a varnished banknote comprising from 0.0015 to 2.5 wt.% of a lactam.

Preferably the lactam is present at a level of from 0.0015 to 1 wt.%.

Preferably the lactam is of formula (I) or (II): 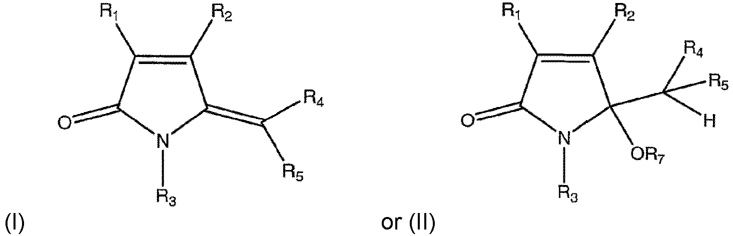 wherein:
R₁ and R₂ are each independently selected from hydrogen, halogen, alkyl, cycloalkyl, alkoxy, oxoalkyl, alkenyl, heterocyclyl, heteroaryl, aryl and aralalkyl; and
R₃ is selected from hydrogen, hydroxyl, alkyl, cycloalkyl, alkoxy, oxoalkyl, alkenyl, heterocyclyl, heteroaryl, cycloalkyl, aryl, aralalkyl, -C(O)CR₆=CH₂, and (CH₂)ₙN⁺(R^{a})₃, where n is an integer from 1 to 16, preferably 2 to 8, and where each R^{a} is independently H or C₁₋₄ alkyl;
R₄ and R₅ are independently selected from hydrogen, aryl, heterocyclyl, heteroaryl, and arylalkyl; and
R₆ is selected from hydrogen and methyl; and
R₇ is selected from hydrogen and -C(O)CR₆=CH₂; and
preferably, at least one of R₄ and R₅ is hydrogen.

It is preferred the in the lactam of formula (I) or (II), R₁, R₄ and R₅ are H; R₃ is H, or (CH₂)ₙN⁺(CH₃)₃, where n is an integer from 1 to 16, preferably 2 to 8; and R₂ is a phenyl group, or a mono-substituted phenyl group; preferably R₂ is selected from phenyl, 4-fluorophenyl, 2-fluorophenyl, 4-chlorophenyl, 3-chlorophenyl, 4-bromophenyl and 4-methylphenyl.

Preferably the lactam is a lactam selected from:

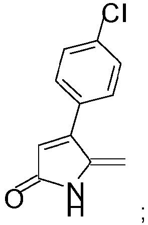

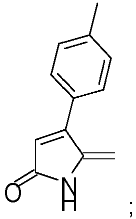

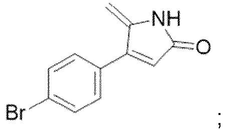

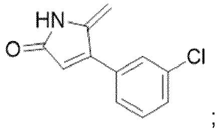

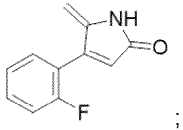

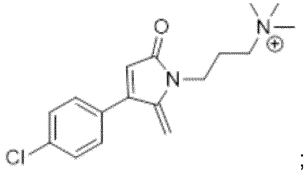

Where the lactam is cationic in nature, the cation can be used or with a suitable counterion (e.g. iodide).

More preferably the lactam is: 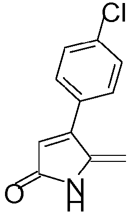 4-(4-chlorophenyl)-5-methylene-pyrrol-2-one; or 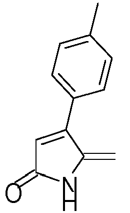 5-methylene-4-(p-tolyl)pyrrol-2-one

Most preferably the lactam is: 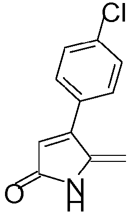 4-(4-chlorophenyl)-5-methylene-pyrrol-2-one

Preferably the lactam is in encapsulated form.

Preferably the varnish is a water-based varnish or an ultraviolet drying varnish.

Preferably the varnished banknote comprises a material selected from: cellulosic substrate, preferably cotton, or cotton in a blend with flax, abaca or eucalyptus pulp; polymer substrate, preferably polypropylene; or plastic substrate.

In a second aspect, the invention relates to the use of a lactam to either impart anti-biofilm properties to a banknote, or to inhibit biofilm growth on a banknote substrate.

Preferably, in these uses, the lactam is of formula (I) or (II), R₁, R₄ and R₅ are H; R₃ is H, or (CH₂)ₙN⁺(CH₃)₃, where n is an integer from 1 to 16, preferably 2 to 8; and R₂ is a phenyl group, or a mono-substituted phenyl group; preferably R₂ is selected from phenyl, 4-fluorophenyl, 2-fluorophenyl, 4-chlorophenyl, 3-chlorophenyl, 4-bromophenyl and 4-methylphenyl.

Preferably, in these uses, the lactam has the following structure:

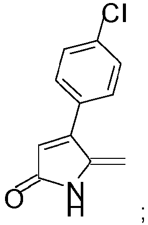

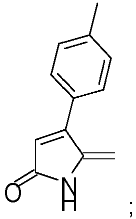

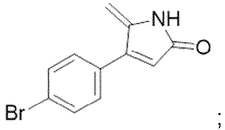

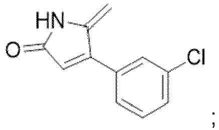

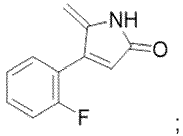

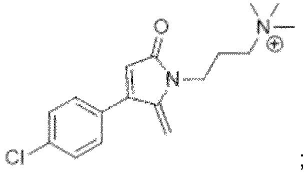

Where the lactam is cationic in nature, the cation can be used or with a suitable counterion (e.g. iodide).

More preferably the lactam is: 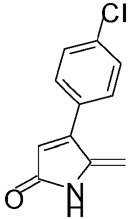 4-(4-chlorophenyl)-5-methylene-pyrrol-2-one; or 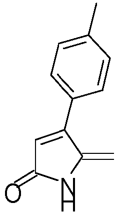 5-methylene-4-(p-tolyl)pyrrol-2-one

Most preferably the lactam is: 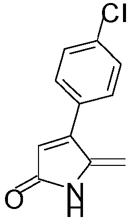 4-(4-chlorophenyl)-5-methylene-pyrrol-2-one.

### Detailed Description of the Invention

The indefinite article "a" or "an" and its corresponding definite article "the" as used herein means at least one, or one or more, unless specified otherwise.

It will be appreciated that, except where expressly provided otherwise, all preferences are combinable.

### Description of the Figures

- Figure 1: is a graph showing the reduction of microorganism *P*. *aeruginosa* on treatment of cellulosic (paper) and polymer substrates with lactam varnish;
- Figure 2: are SEM images showing the reduction of microorganism *P*. *aeruginosa* on treatment of cellulosic (paper) and polymer substrates with lactam varnish;
- Figure 3: is a graph showing the reduction of microorganism *C*. *albicans* on treatment of cellulosic (paper) and polymer substrates with lactam varnish;
- Figure 4: are SEM images showing the reduction of microorganism *C*. *albicans* on treatment of cellulosic (paper) and polymer substrates with lactam varnish;
- Figure 5: is a graph showing the reduction of microorganism *S. aureus* on treatment of cellulosic (paper) and polymer substrates with lactam varnish;
- Figure 6: are SEM images showing the reduction of microorganism *S. aureus* on treatment of cellulosic (paper) and polymer substrates with lactam varnish

### Lactam

A lactam is a cyclic amide. Preferred lactams are γ-lactams which have 5 ring atoms.

Preferably the lactam is of formula (I) or (II): 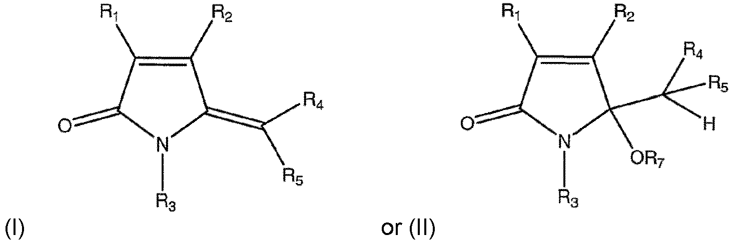 wherein:
R₁ and R₂ are each independently selected from hydrogen, halogen, alkyl, cycloalkyl, alkoxy, oxoalkyl, alkenyl, heterocyclyl, heteroaryl, aryl and aralalkyl; and
R₃ is selected from hydrogen, hydroxyl, alkyl, cycloalkyl, alkoxy, oxoalkyl, alkenyl, heterocyclyl, heteroaryl, cycloalkyl, aryl, aralalkyl, -C(O)CR₆=CH₂, and (CH₂)ₙN⁺(R^{a})₃, where n is an integer from 1 to 16, preferably 2 to 8, and where each R^{a} is independently H or C₁₋₄ alkyl;
R₄ and R₅ are independently selected from hydrogen, aryl, heterocyclyl, heteroaryl, and arylalkyl; and
R₆ is selected from hydrogen and methyl; and
R₇ is selected from hydrogen and -C(O)CR₆=CH₂; and

Preferably, at least one of R₄ and R₅ is hydrogen.

It will be appreciated that, where appropriate groups may be optionally substituted. Optional substituents may include halogens, C₁₋₄alkyl, C₁₋₄haloalkyl (for example, CF₃) and C₁₋₄alkoxy.

Alkyls may, for example, be C₁₋₁₂alkyls, such as C₁₋₆alkyls. Aryls may, for example, be C₆₋₁₀aryls, for example, phenyls.

Preferably, at least one of R₁ and R₂ is selected from heterocyclyl, heteroaryl, aryl and arylalkyl.

Preferably, R₁ is hydrogen. Preferably, R₃ is hydrogen, or (CH₂)ₙN⁺(R^{a})₃, where n is an integer from 1 to 16, preferably 2 to 8, and where each R^{a} is independently H or C₁₋₄ alkyl, more preferably R^{a} is CH₃; Preferably, R₄ is hydrogen. Preferably, R₅ is hydrogen. Preferably, R₆ is hydrogen. Preferably, R₇ is hydrogen. Preferably, R₂ is aryl or aralalkyl. More preferably, R₂ is a phenyl group or a substituted phenyl group, for example, a mono-substituted phenyl group. Substitution may be *ortho, meta,* or *para.* Preferred substituents include halogen and methyl. For example, and without limitation, R₂ may be selected from phenyl, 4-fluorophenyl, 2-fluorophenyl, 4-chlorophenyl, 3-chlorophenyl, 4-bromophenyl and 4-methylphenyl.

More preferably in the lactam of formula (I) or (II), R₁, R₄ and R₅ are H; R₃ is H, or (CH₂)ₙN⁺(CH₃)₃, where n is an integer from 1 to 16, preferably 2 to 8; and R₂ is a phenyl group, or a mono-substituted phenyl group; preferably R₂ is selected from phenyl, 4-fluorophenyl, 2-fluorophenyl, 4-chlorophenyl, 3-chlorophenyl, 4-bromophenyl and 4-methylphenyl.

Even more preferably the lactam is of formula (I), R₁, R₄ and R₅ are H; R₃ is H, or (CH₂)ₙN⁺(CH₃)₃, where n is an integer from 1 to 16, preferably 2 to 8; and R₂ is a phenyl group, or a mono-substituted phenyl group; preferably R₂ is selected from phenyl, 4-fluorophenyl, 2-fluorophenyl, 4-chlorophenyl, 3-chlorophenyl, 4-bromophenyl and 4-methylphenyl.

Where the lactam is cationic in nature, it can be used as such, or suitably with a counterion (e.g. iodide)

Most preferably the lactam is a lactam selected from: 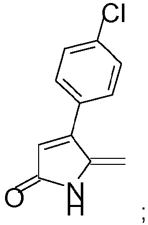 4-(4-chlorophenyl)-5-methylene-pyrrol-2-one; and 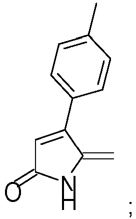 5-methylene-4-(p-tolyl)pyrrol-2-one; 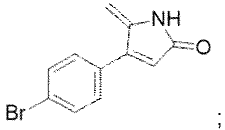 4-(4-bromophenyl)-5-methylene-pyrrol-2-one; 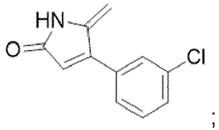 4-(3-chlorophenyl)-5-methylene-pyrrol-2-one; 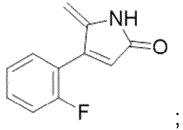 4-(2-fluorophenyl)-5-methylene-pyrrol-2-one; and

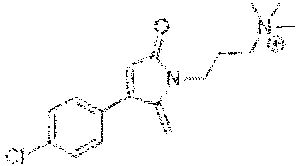

Where the lactam is cationic in nature, the cation can be used or with a suitable counterion (e.g. iodide).

More preferably the lactam is: 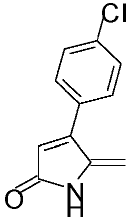 4-(4-chlorophenyl)-5-methylene-pyrrol-2-one; or 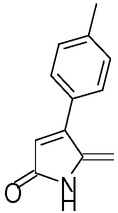 5-methylene-4-(p-tolyl)pyrrol-2-one

Most preferably the lactam is: 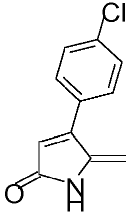 4-(4-chlorophenyl)-5-methylene-pyrrol-2-one.

Preferably the lactam is encapsulated.

Suitably, the encapsulated lactam is a polymer encapsulated lactam.

The encapsulated lactam may be encapsulated in a polymer selected from a poly urea polymer, a melamine-formaldehyde copolymer; a urea formaldehyde copolymer and mixtures thereof.

Suitably the polymer is a condensation polymer. For example, the polymer may be a condensation polymer of produced from a diamine and a disocyanate.

For example, the polymer may be or may comprise a polyurea of Formula P1: 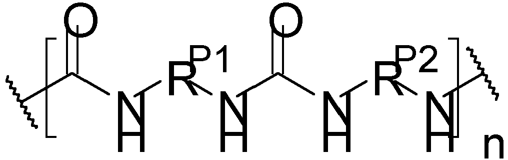 wherein R^{P1} comprises a phenylene and R^{P2} is an alkylene.

For example, R^{P1} may be -CH₂-phenylene; in other words, the polymer may be derived from polymethylene polyphenyl isocyanate.

For example, R^{P2} may be a straight chain alkylene of formula -(CH₂)ₘ-. In some cases, m is an integer from 2 to 10, for example from 2 to 8, for example from 4 to 8, for example, 6 (in other words, R^{P2} may be hexylene).

In other words, the lactam may be encapsulated in a polymer formed from polymethylene polyphenyl isocyanate and hexamethylenediamine.

In some cases, the polymer and / or encapsulate structure is selected and / or configured to permit controlled or triggered release. For example, the encapsulate may dissolve at a predetermined rate under certain conditions. For example, the encapsulate may release in response to a trigger. The trigger may be, for example, the presence or a certain concentration of acid, base, a salt, an enzyme; or a non-chemical trigger such as ultrasound or light.

Suitably, the lactam is encapsulated to form particles whose average diameter is from about 10 nanometers to about 1000 microns, preferably from about 50 nanometers to about 100 microns, more preferably from about 2 to about 40 microns, even more preferably from about 4 to 15 microns. A particularly preferred range is from about 5 to 10 microns, for example 6 to 7 microns. The capsule distribution can be narrow, broad or multimodal. Multimodal distributions may be composed of different types of capsule chemistries.

The encapsulation process suitably is done in a carrier oil, which may be a ketone. For example, the carrier oil may be a C₅₋₂₀alkyl ketone, for example a C₅₋₁₅alkyl ketone, for example a C₅₋₁₀alkyl ketone, for example a C₆₋₈alkyl ketone, such as a C₇alkyl ketone. The alkylketone may be branched or straight-chain. Preferably, it is straight chain. The oxo group of the alkyl ketone may be located at C2; in other words, the alkylketone may be an alkyl-2-one. A preferred carrier oil is 2-heptanone.

### Levels of lactam

The lactam is present at a level of from 0.0015 to 2.5 wt.%. This equates to from 15 to 25,000 ppm (parts per million).

The lactam is preferably present at a level of from 0.0015 to 1 wt.% (15 to 10,000 ppm). For example, the lactam may be suitably present at levels of 0.0015 to 0.5 wt.% (15 to 5,000 ppm), or even 0.05 to 0.5 wt.% (50 to 5,000 ppm), or even 0.05 to 0.1 wt.% (50 to 1,000 ppm).

### Varnish

Post-print varnish is a thin protective layer on both sides of the banknote. It is applied as last step in the printing process. It smoothens the rough cotton surface and protects the printing including the security features. Studies reported varnished banknotes stay clean for a longer time increase circulation time.

A varnish may be considered a combination of liquid resins, solvents and additives (wax, adhesive, photo initiator, etc.), which is applied in the form of a continuous transparent ink layer. The varnish, once dry, makes the banknote surface impermeable to soiling. The first varnishes used on banknotes were so called solvent-based varnishes. The following types of varnish may be used:
- Water-based.
- Ultraviolet drying (UV).
- Double layer, which can be applied in two ways: i) two layers of waterbased varnish, and ii) an undercoat of water-based varnish with a top coat of UV varnish.

Water-based varnishes dry slowly under infrared (IR) and/or warm air. During the drying process, part of the varnish layer originally printed on the banknote evaporates, leaving a final varnish layer that is thinner than the original and almost invisible. UV varnishes are exposed to ultraviolet radiation which causes the particles in the varnish layer to bind and so dry very quickly, such that the thickness of the printed varnish layer is not reduced.

Preferably the varnish is a water-based varnish or an ultraviolet drying varnish.

### Varnished Banknote

The varnish is applied to a banknote substrate.

Preferably the banknote comprises a material selected from: cellulosic substrate; polymer substrate; or plastic substrate.

Preferred cellulosic substrates are cotton, or cotton in a blend with flax, abaca (banana plant) or eucalyptus pulp.

Preferred polymer substrates include polypropylene, in particular biaxially orientated polypropylene (BOPP).

### Further ingredients

The varnish may further comprise standard varnish ingredients such as liquid resins, solvents, wax, adhesive, photo initiator.

### Methods of manufacture of varnishing banknotes

Preferred methods of manufacture for varnishing banknotes are the following options:
a) Varnishing the substrate
b) Varnishing the banknote after printing (post-varnishing)
c) Varnishing with two layers, one applied to the substrate and the other to the banknote after printing

### Varnishing paper banknotes (post-print)

Banknote paper is a porous material which readily absorbs damp, contaminant particles and microorganisms. Varnishing creates a layer protecting the banknote against surface soiling, enabling it to remain in circulation longer. Varnishing is currently used by numerous central banks worldwide, having become one of the solutions available to reduce the cost of cash by extending the lifetime of circulating banknotes.

### Varnishing polymer and hybrid substrate banknotes (pre- and post- printing)

In the case of polymer and hybrid substrates it is preferable to apply any pre-varnish coat for the ink to better adhere to the substrate. This is followed by a post-varnishing coat to reduce wear on the print during the banknote's circulating lifetime. These varnishes contribute to improving the mechanical and anti-soiling properties of these substrates with respect to conventional banknotes printed on cotton paper.

Varnishing protects against soiling. Nevertheless, the effectiveness of the anti-soiling protection depends both on the type of varnish used and the thickness of the varnish layer coating the banknote. In the case of thin layers, it is worth mentioning that if banknotes are in circulation for a long-time surface cracks may appear in the varnished surface, which can collect dirt and so cause dark lines to appear. One solution to this problem is to apply a double coat of varnish.

The invention will be further described with the following non-limiting examples.

### Examples

### Example 1 - Preparation of examples of preferred lactams

### Preparation of 4-(4-chlorophenyl)-5-hydroxy-5-methylfuran-2(5H)-one

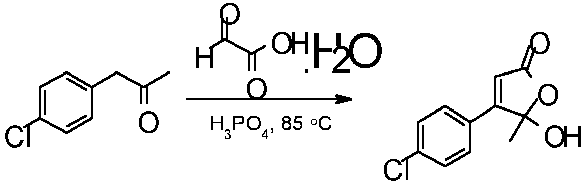

1-(4-Chlorophenyl)propan-2-one (40.00 g, 34.75 mL, 237.2 mmol), glyoxylic acid monohydrate (32.75 g, 355.8 mmol) and phosphoric acid (69.74 g, 711.7 mmol) were combined at room temperature before heating to 85 °C overnight. After cooling to room temperature, the mixture was poured into a mixture of water (500 mL) and ethyl acetate (500 mL). The layers were separated and the aqueous phase extracted with ethyl acetate (500 mL). The combined organic layers were washed with a 1:1 mixture of water and brine (2 x 500 mL), dried (MgSO₄) and concentrated under reduced pressure to yield 4-(4-chlorophenyl)-5-hydroxy-5-methylfuran-2(5H)-one (66.00 g, >100% yield) as a brown oil. The material was used in the next step without further purification.

### Preparation of 4-(4-chlorophenyl)-5-hydroxy-5-methyl-1H-pyrrol-2(5H)-one

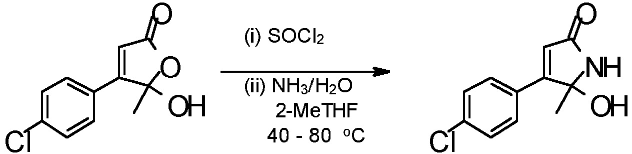

4-(4-Chlorophenyl)-5-hydroxy-5-methylfuran-2(5H)-one (66.00 g, 293.8 mmol) was dissolved in thionyl chloride (196.8 g, 120.0 mL, 1654 mmol) and heated at 40 °C for 1 hour, then 80 °C for 2 hours. The mixture was concentrated under reduced pressure and azeotroped with 2-methyltetrahydrofuran (200 mL). The residue was diluted with 2-methyltetrahydrofuran (160 mL) and this solution added to a cooled stirring mixture of 28% ammonia in water (180 mL) in 2-methyltetrahydrofuran (20 mL) at 0 °C. The mixture was warmed to room temperature and stirred overnight. Water (100 mL) and ethyl acetate (200 mL) were added and the layers separated. The aqueous phase was extracted with ethyl acetate (200 mL), and the combined organic extracts dried (MgSO₄) and concentrated under reduced pressure. Purification by dry flash column chromatography (5-60% ethyl acetate in heptane) yielded 4-(4-chlorophenyl)-5-hydroxy-5-methyl-1H-pyrrol-2(5H)-one (23.18 g, 35% yield) as a cream coloured solid.
¹H NMR (400 MHz, d₆-DMSO) 8.55 (brs, 1H), 7.88-7.83 (m, 2H), 7.51-7.46 (m, 2H), 6.37 (d, 1H), 6.32 (s, 1H), 1.45 (s, 3H)
UPLC (Basic) 1.51/5.00 min, 100% purity, M+H⁺ 224
MP 177 °C

### Preparation of 4-(4-chlorophenyl)-5-methylene-1H-pyrrol-2(5H)-one

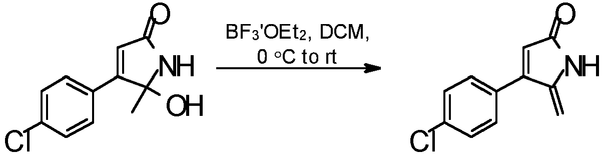

To a cooled solution of 4-(4-chlorophenyl)-5-hydroxy-5-methyl-1H-pyrrol-2(5H)-one (10.00 g, 44.51 mmol) in dry dichloromethane (100 mL) at 0 °C was added a solution of boron trifluoride diethyl etherate (8.213 g, 7.142 mL, 57.87 mmol) in dry dichloromethane (45 mL) over 15 minutes. The mixture was stirred at 0 °C, before slowly warming to room temperature and stirring for 2 hours. The reaction was quenched with ice-water (100 mL) and the layers separated. The aqueous layer was extracted with dichloromethane (100 mL), and the combined organic layers washed with a 1:1 mixture of water and saturated aqueous sodium hydrogen carbonate solution (100 mL), dried (MgSO₄) and filtered. Silica was added to the filtrate and the mixture stirred for 10 minutes before filtering through a plug of silica, washing through with dichloromethane followed by a 3:1 mixture of dichloromethane:diethyl ether. Fractions containing the desired product were combined and concentrated under reduced pressure. Upon concentration a precipitate formed, which was collected by filtration, washing with diethyl ether, to yield 4-(4-chlorophenyl)-5-methylene-1H-pyrrol-2(5H)-one (5.25 g, 57% yield) as a cream coloured solid.
¹H NMR (400 MHz, d₆-DMSO) 10.10 (s, 1H), 7.54-7.47 (m, 4H), 6.36 (s, 1H), 5.04 (t, 1H), 4.85 (s, 1H)
UPLC (Basic) 1.87/5.00 min, 100% purity, M+H⁺ 206
MP 182 °C

### Preparation of 5-hydroxy-5-methyl-4-(p-tolyl)furan-2(5H)-one

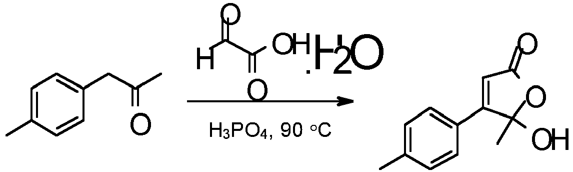

1-(p-Tolyl)propan-2-one (25.00 g, 24.00 mL, 168.7 mmol), glyoxylic acid monohydrate (23.29 g, 253.0 mmol) and phosphoric acid (49.60 g, 506.1 mmol) were combined at room temperature before heating at 90 °C overnight. After cooling to room temperature, the mixture was poured into a stirring mixture of ice-water (400 mL) and ethyl acetate (400 mL). The layers were separated and the organic phase washed with water (100 mL), dried (MgSO₄) and concentrated under reduced pressure. The mixture was azeotroped with 2-methyltetrahydrofuran (50 mL) to yield 5-hydroxy-5-methyl-4-(p-tolyl)furan-2(5H)-one (16.50 g, 48% yield) as a brown solid.
¹H NMR (400 MHz, d₆-DMSO) 7.86 (s, 1H), 7.75 (d, 2H), 7.28 (d, 2H), 6.59 (s, 1H), 2.32 (s, 3H), 1.61 (s, 3H)

### Preparation of 5-hydroxy-5-methyl-4-(p-tolyl)-1H-pyrrol-2(5H)-one

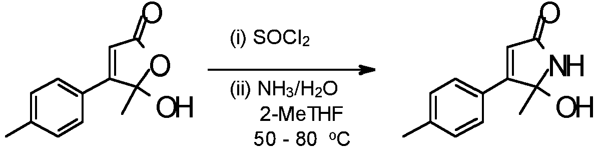

5-Hydroxy-5-methyl-4-(p-tolyl)furan-2(5H)-one (16.50 g, 80.80 mmol) was dissolved in thionyl chloride (48.06 g, 29.47 mL, 404.0 mmol) and heated at 50 °C for 1 hour, before heating at reflux for 1 hour. After cooling to room temperature, the mixture was concentrated under reduced pressure and azeotroped with 2-methyltetra-hydrofuran (2 x 50 mL). The residue was diluted with 2-methyltetrahydrofuran (60 mL) and this solution added to a cooled stirring mixture of 28% ammonia in water (55 mL, 808.0 mol) in 2-methyltetrahydrofuran (10 mL) at 0 °C. The mixture was warmed to room temperature and stirred overnight. 2-Methyltetrahydrofuran was removed under reduced pressure, and the residue diluted with water (200 mL) and diethyl ether (100 mL) and the mixture stirred for 20 minutes at room temperature. The solids were collected by filtration and stirred in water (100 mL) and diethyl ether (50 mL) at room temperature for 10 minutes. The solids were collected by filtration and washed with water, diethyl ether and dried under vacuum at 50 °C to yield 5-hydroxy-5-methyl-4-(p-tolyl)-1H-pyrrol-2(5H)-one (10.49 g, 31% yield) as a light beige solid.
¹H NMR (400 MHz, d₆-DMSO) 8.44 (brs, 1H), 7.73 (d, 2H), 7.21 (d, 2H), 6.24 (s, 2H), 2.29 (s, 3H), 1.45 (s, 3H)
¹³C NMR (400 MHz, d₆-DMSO) 170.4 (s, 1C), 161.1 (s, 1C), 139.8 (s, 1C), 129.7 (s, 2C), 128.9 (s, 1C), 128.2 (s, 2C), 119.1 (s, 1C), 87.8 (s, 1C), 26.7 (s, 1C), 21.5 (s, 1C)
UPLC (Basic) 1.41/5.00 min, 100% purity, M+H⁺ 204
MP 178 °C Decomposition

### Preparation of 5-methylene-4-(p-tolyl)-1H-pyrrol-2(5H)-one

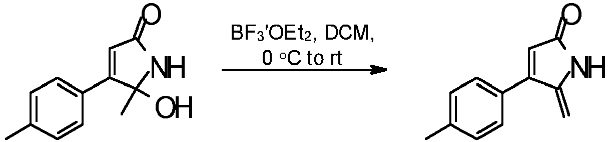

To a cooled solution of 5-hydroxy-5-methyl-4-(p-tolyl)-1H-pyrrol-2(5H)-one (8.68 g, 42.7 mmol) in dry dichloromethane (87 mL) at 0 °C was added a solution of boron trifluoride diethyl etherate (6.85 g, 5.96 mL, 55.5 mmol) in dry dichloromethane (40 mL) over 15 minutes. After 1 hour the mixture was allowed to slowly warm to room temperature. After a further 3 hours, the reaction was diluted with dichloromethane (50 mL) and ice-water (100 mL) and stirred for 10 minutes. The layers were separated and the organic layer washed with water (100 mL), a 1:1 mixture of water and saturated aqueous sodium hydrogen carbonate solution (100 mL) and brine (100 mL) and the organic layer filtered through Celite, washing with dichloromethane. Any excess water was removed by pipette before drying the filtrate (MgSO₄) and concentrating under reduced pressure to a brown solid. The solids were stirred in hot dichloromethane (120 mL) for 15 minutes before slowly cooling to room temperature and then 0 °C. The solids were collected by filtration to yield 5-methylene-4-(p-tolyl)-1H-pyrrol-2(5H)-one (3.87 g, 49% yield) as a yellow solid. Silica was added to the filtrate and the mixture stirred for 10 minutes before filtering through a plug of silica, washing through with dichloromethane and then a 4:1 mixture of dichloromethane:diethyl ether. The filtrate was concentrated under reduced pressure to yield 5-methylene-4-(p-tolyl)-1H-pyrrol-2(5H)-one (0.58 g, 7%) as a yellow solid. Total yield of 5-methylene-4-(p-tolyl)-1H-pyrrol-2(5H)-one (4.45 g, 56% yield).
¹H NMR (400 MHz, d₆-DMSO) 10.11 (brs, 1H), 7.35 (d, 2H), 7.25 (d, 2H), 6.25 (s, 1H), 5.01 (s, 1H), 4.85 (s, 1H), 2.31 (s, 3H)
UPLC (Basic) 1.83/5.00 min, 100% purity, M+H⁺ 186
MP 200 °C Decomposition

### EXAMPLE 2 - Pseudomonas, Staphylococcus and Candida static biofilm growth inhibition of as measured by viability on paper (cellulosic) and polymer substrates

The lactam used in these experiments was 4-(4-chlorophenyl)-5-methylene-pyrrol-2-one and is given the code 488. The structure is:-

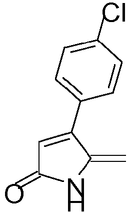

Lactam was incorporated into ultraviolet drying varnish (UV Guard, Gleitsmann security) to a final concentration of 7, 100 and 275mg/l (ppm). This equates to 0.0007 wt.%, 0.01 wt.% and 0.0275 wt.% respectively.

The varnish was printed onto paper (cellulosic) and polymer banknote substrate using an IGT proofer (IGT testing systems).

P. aeruginosa (PA01), S. aureus (Newman's strain) were cultured overnight at 37°C on TSA plates. C. albicans 3153A was cultured for 2 days at 30°C on MEA plates. Prior to use in tests, colonies of each organism were added to 20mL of brain-heart infusion broth (BHI) containing 5mL of glass beads and homogenised for 30 seconds. The optical density of each organism was measured and adjusted to give 1 x 10⁷ cfu/mL. Substrates where cut into 9cm² d discs and placed in the well of 6-well plates. Inoculum (0.3ml) was placed directly on polymer and paper substrates (with and without lactam) and incubated overnight in appropriate broth. Textiles were subsequently removed, washed in PBS and metabolism assessed by AlamarBlue on a plate reader. Data were presented as percentage of no-lactam control.

### SEM Sample preparation

Fixative was prepared as described (Erlandsen, Kristich, Dunny, Wells, J. Histochem Cytochem, 2004), using 2% para-formaldehyde, 2% gluteraldehyde and 0.15M Sodium Cacodylate and 0.15% Alcian Blue, pH 7.4. The fixative was applied (enough to cover the biofilms) to the wells containing the biofilms on suitable substrates for 2 hours, this varied between 2 and 22 hours.

| Component | 5ml | 10ml | 15ml | 20ml |
|---|---|---|---|---|
| 8% Para-formaldehyde | 1.25 ml | 2.5 ml | 3.75 ml | 5 ml |
| 0.3M Sodium Cacodylate | 2.5 ml | 5 ml | 7.5 ml | 10 ml |
| 25% Gluteraldehyde | 0.4 ml | 0.8 ml | 1.2 ml | 1.6 ml |
| Distilled water | 0.85 ml | 1.7 ml | 2.55 ml | 3.4 ml |
| Alcian Blue | 0.0075 g | 0.015g | 0.0225 g | 0.03 g |

Paraformaldehyde was prepared at 60°C with 80ml distilled water and 8g of paraformaldehyde using a hot plate and magnetic stirrer. NaOH was added drop by drop until solution cleared and was adjusted to pH 7.2 with HCl.

Following fixation, the fixative solution was removed and 0.15M Sodium Cacodylate buffer was added to the samples. The samples were then stored in the fridge until processing. Samples were washed 3 x 5mins with 300ml fresh buffer to remove any remaining glutaraldehyde. Subsequently, a solution of 1% Osmium tetroxide (OsO4) was prepared 1:1 with 0.15M Sodium Cacodylate buffer, and added to the samples before incubating for 1 hour at room temperature. Samples were rinsed with distilled water 3 x 10 mins. 0.5% aqueous Uranyl acetate was then added to the samples before incubation in the dark for 30 mins at room temperature.

Samples were then dehydrated in an ascending ethanol series:

| Alcohol | Time |
|---|---|
| 30% alcohol | 2 x 5 mins |
| 50% alcohol | 2 x 5 mins |
| 70% alcohol | 2 x 5 mins |
| 90% alcohol | 2 x 5 mins |
| Absolute alcohol | 4 x 5 mins |
| Dried absolute alcohol | 2 x 5 mins |

Samples were transferred from the original 24-well plate into a petri dish of hexamethyldisilazane (HMDS) for 5 mins, then to a second dish for 5 mins before being placed in a new 24-well plate lined with filter paper. The plate was then placed in a desiccator overnight to allow evaporation and drying or samples.

After sputter coating with gold-palladium in an argon filled chamber, samples were viewed under a JEOL JSM-6400 scanning electron microscope and images were assembled using the Photoshop software.

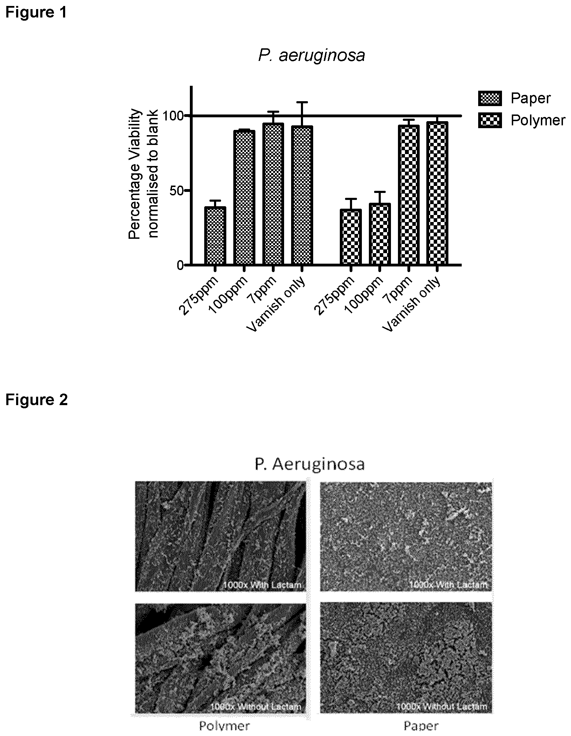

Table 2 and figures 1 & 2 show the effect of reduction of microorganism P. *aeruginosa* on treatment of cellulosic (paper) and polymer substrates with lactam varnish, using a varnish control and varnish with lactam incorporated

**Table 2 - Reduction of microorganism P. aeruginosa on treatment of cellulosic (paper) and polymer substrates with lactam varnish**

| | **Paper substrate** | **Polymer substrate** |
|---|---|---|
| | **Mean** | **Mean** |
| Varnish + 275ppm lactam | 38.50 | 36.92 |
| Varnish + 100ppm lactam | 89.31 | 40.81 |
| Varnish + 7ppm lactam | 94.46 | 92.93 |
| Varnish Control | 92.52 | 95.53 |

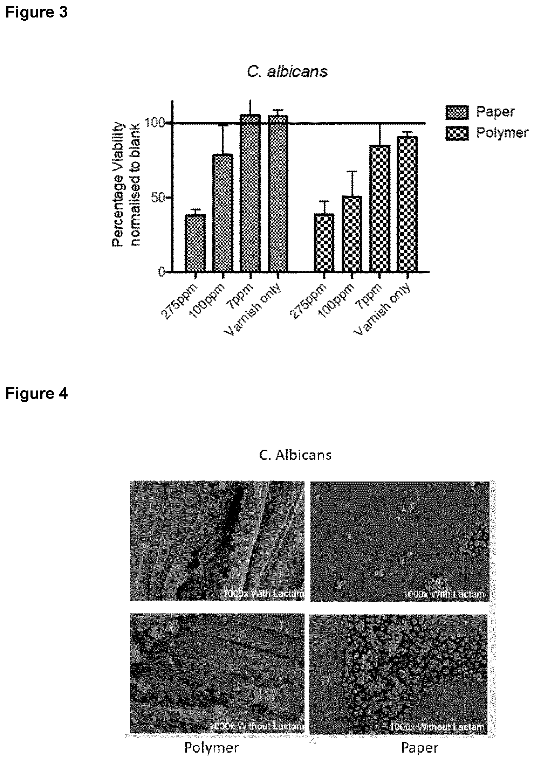

Table 3 and figures 3 & 4 show the effect of reduction of microorganism C. *albicans* on treatment of cellulosic (paper) and polymer substrates with lactam varnish, using a varnish control and varnish with lactam incorporated

**Table 3 - Reduction of microorganism C. albicans on treatment of cellulosic (paper) and polymer substrates with lactam varnish**

| | **Paper substrate** | **Polymer substrate** |
|---|---|---|
| | **Mean** | **Mean** |
| Varnish + 275ppm lactam | 38.24 | 38.61 |
| Varnish + 100ppm lactam | 78.72 | 50.74 |
| Varnish + 7ppm lactam | 104.96 | 84.88 |
| Varnish Control | 104.62 | 90.44 |

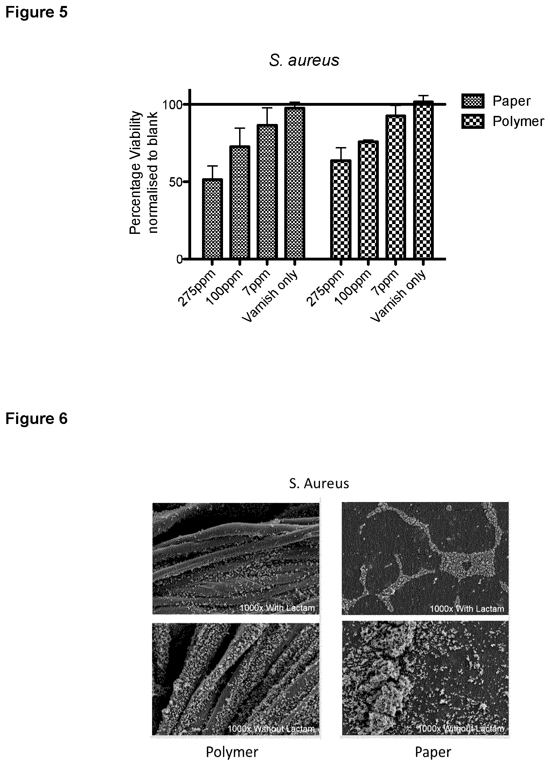

Table 4 and figures 5 & 6 show the effect of reduction of microorganism *S. aureus* on treatment of cellulosic (paper) and polymer substrates with lactam varnish, using a varnish control and varnish with lactam incorporated

**Table 4 - Reduction of microorganism S. aureus on treatment of cellulosic (paper) and polymer substrates with lactam varnish**

| | **Paper substrate** | **Polymer substrate** |
|---|---|---|
| | **Mean** | **Mean** |
| Varnish + 275ppm lactam | 51.45 | 63.83 |
| Varnish + 100ppm lactam | 72.84 | 75.89 |
| Varnish + 7ppm lactam | 86.60 | 92.63 |
| Varnish Control | 97.77 | 101.75 |

It can be seen from the experimental data that the lactam varnished substrates have reduced microorganism levels, particularly for the polymer substrate varnished with lactam and particularly for varnishes comprising greater than 15ppm lactam.

## Claims

1. A varnished banknote comprising from 0.0015 to 2.5 wt.% of a lactam.

2. A varnished banknote according to claim 1, wherein the lactam is present at a level of from 0.0015 to 1 wt.%, more preferably present at levels of 0.0015 to 0.5 wt.%, even more preferably from 0.05 to 0.5 wt.%, most preferably from 0.05 to 0.1 wt.%.

3. A varnished banknote according to claim 1 or claim 2, wherein the lactam is of formula (I) or (II): 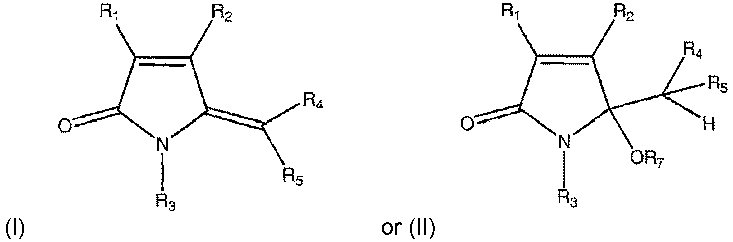 wherein:
R₁ and R₂ are each independently selected from hydrogen, halogen, alkyl, cycloalkyl, alkoxy, oxoalkyl, alkenyl, heterocyclyl, heteroaryl, aryl and aralalkyl; and
R₃ is selected from hydrogen, hydroxyl, alkyl, cycloalkyl, alkoxy, oxoalkyl, alkenyl, heterocyclyl, heteroaryl, cycloalkyl, aryl, aralalkyl, -C(O)CR₆=CH₂, and (CH₂)ₙN⁺(R^{a})₃, where n is an integer from 1 to 16, preferably 2 to 8, and where each R^{a} is independently H or C₁₋₄ alkyl;
R₄ and R₅ are independently selected from hydrogen, aryl, heterocyclyl, heteroaryl, and arylalkyl; and
R₆ is selected from hydrogen and methyl; and
R₇ is selected from hydrogen and -C(O)CR₆=CH₂; and
preferably, at least one of R₄ and R₅ is hydrogen.

4. A varnished banknote according to claim 3, wherein in the lactam of formula (I) or (II), R₁, R₄ and R₅ are H; R₃ is H, or (CH₂)ₙN⁺(CH₃)₃, where n is an integer from 1 to 16, preferably 2 to 8; and R₂ is a phenyl group, or a mono-substituted phenyl group; preferably R₂ is selected from phenyl, 4-fluorophenyl, 2-fluorophenyl, 4-chlorophenyl, 3-chlorophenyl, 4-bromophenyl and 4-methylphenyl.

5. A varnished banknote according to any preceding claim, wherein the lactam is a lactam selected from:

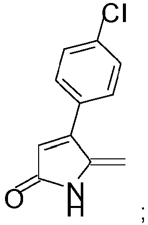

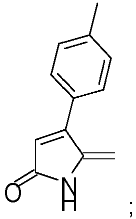

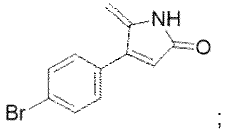

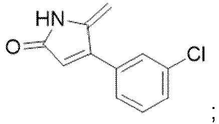

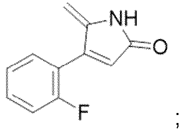

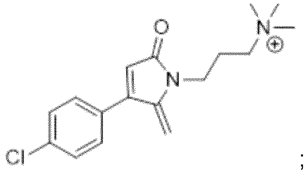

6. A varnished banknote according to any preceding claim, wherein the lactam is selected from: 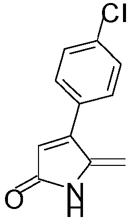 4-(4-chlorophenyl)-5-methylene-pyrrol-2-one; or 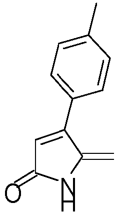 5-methylene-4-(p-tolyl)pyrrol-2-one; most preferably the lactam is: 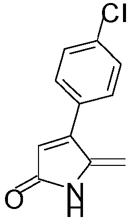 4-(4-chlorophenyl)-5-methylene-pyrrol-2-one.

7. A varnished banknote according to any preceding claim, wherein the lactam is in encapsulated form.

8. A varnished banknote according to any one of claims 1 to 7, wherein the varnish is a water-based varnish or an ultraviolet drying varnish.

9. A varnished banknote according to any preceding claim, wherein the banknote comprises a material selected from: cellulosic substrate, preferably cotton, or cotton in a blend with flax, abaca or eucalyptus pulp; polymer substrate, preferably polypropylene; or plastic substrate.

10. Use of a lactam to either impart anti-biofilm properties to a banknote, or to inhibit biofilm growth on a banknote.

11. Use according to claim 10, wherein the lactam is of formula (I) or (II): 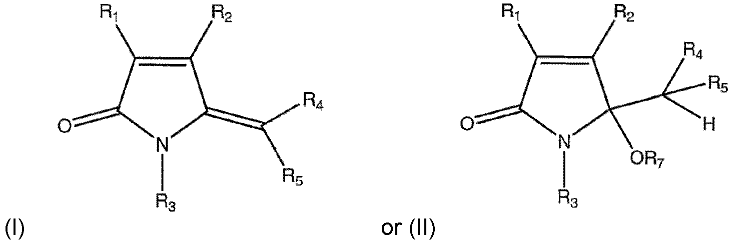 wherein:
R₁ and R₂ are each independently selected from hydrogen, halogen, alkyl, cycloalkyl, alkoxy, oxoalkyl, alkenyl, heterocyclyl, heteroaryl, aryl and aralalkyl; and
R₃ is selected from hydrogen, hydroxyl, alkyl, cycloalkyl, alkoxy, oxoalkyl, alkenyl, heterocyclyl, heteroaryl, cycloalkyl, aryl, aralalkyl, -C(O)CR₆=CH₂, and (CH₂)ₙN⁺(R^{a})₃, where n is an integer from 1 to 16, preferably 2 to 8, and where each R^{a} is independently H or C₁₋₄ alkyl;
R₄ and R₅ are independently selected from hydrogen, aryl, heterocyclyl, heteroaryl, and arylalkyl; and
R₆ is selected from hydrogen and methyl; and
R₇ is selected from hydrogen and -C(O)CR₆=CH₂; and
Preferably, at least one of R₄ and R₅ is hydrogen.

12. Use according to claim 11, wherein in the lactam of formula (I) or (II), R₁, R₄ and R₅ are H; R₃ is H, or (CH₂)ₙN⁺(CH₃)₃, where n is an integer from 1 to 16, preferably 2 to 8; and R₂ is a phenyl group, or a mono-substituted phenyl group; preferably R₂ is selected from phenyl, 4-fluorophenyl, 2-fluorophenyl, 4-chlorophenyl, 3-chlorophenyl, 4-bromophenyl and 4-methylphenyl.

13. Use according to claim 10 wherein the lactam is a lactam selected from: 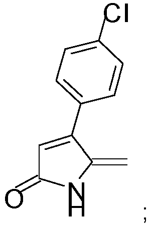 4-(4-chlorophenyl)-5-methylene-pyrrol-2-one; and 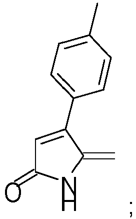 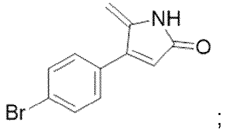 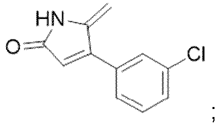 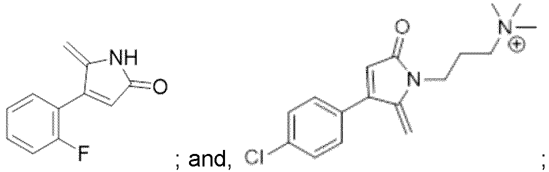
wherein the lactam is preferably: 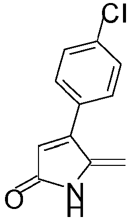 4-(4-chlorophenyl)-5-methylene-pyrrol-2-one; or 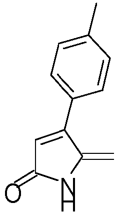 5-methylene-4-(p-tolyl)pyrrol-2-one;
wherein the lactam is most preferably: 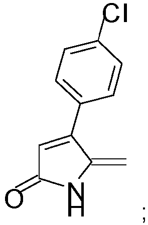 4-(4-chlorophenyl)-5-methylene-pyrrol-2-one.

## Patentansprüche

1. Lackierte Banknote, die 0,0015 bis 2,5 Gew.-% eines Lactams umfasst.

2. Lackierte Banknote nach Anspruch 1, wobei das Lactam in einer Menge von 0,0015 bis 1 Gew.-% vorliegt, bevorzugter in Mengen von 0,0015 bis 0,5 Gew.-%, noch bevorzugter von 0,05 bis 0,5 Gew.-% und höchst bevorzugt von 0,05 bis 0,1 Gew.-%.

3. Lackierte Banknote nach Anspruch 1 oder Anspruch 2, wobei das Lactam die Formel (I) oder (II) aufweist: 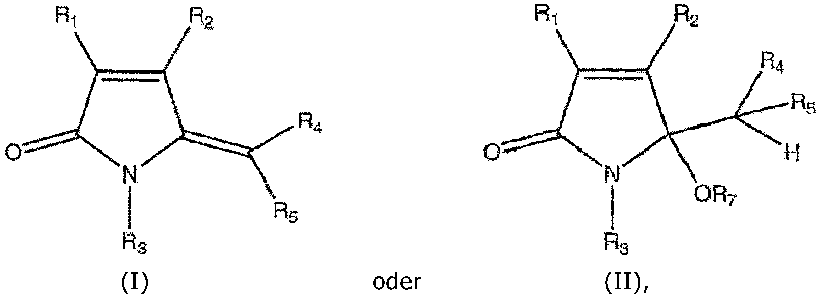 wobei:
R₁ und R₂ jeweils unabhängig voneinander ausgewählt sind unter Wasserstoff, Halogen, Alkyl, Cycloalkyl, Alkoxy, Oxoalkyl, Alkenyl, Heterocyclyl, Heteroaryl, Aryl und Arylalkyl; und
R₃ ist ausgewählt unter Wasserstoff, Hydroxyl, Alkyl, Cycloalkyl, Alkoxy, Oxoalkyl, Alkenyl, Heterocyclyl, Heteroaryl, Cycloalkyl, Aryl, Arylalkyl, -C(O)CR₆=CH₂ und (CH₂)ₙN⁺(R^{a})₃,
wobei n eine ganze Zahl von 1 bis 16, vorzugsweise von 2 bis 8, ist und wobei jedes R^{a} unabhängig voneinander H oder C₁₋₄-Alkyl ist;
R₄ und R₅ unabhängig voneinander ausgewählt sind unter Wasserstoff, Aryl, Heterocyclyl, Heteroaryl und Arylalkyl; und
R₆ ausgewählt ist unter Wasserstoff und Methyl; und
R₇ ausgewählt ist unter Wasserstoff und -C(O)CR₆=CH₂; und
mindestens eines von R₄ und R₅ vorzugsweise Wasserstoff ist.

4. Lackierte Banknote nach Anspruch 3, wobei im Lactam der Formel (I) oder (II) R₁, R₄ und R₅ H sind; R₃ H oder (CH₂)ₙN⁺(CH₃)₃ ist, wobei n eine ganze Zahl von 1 bis 16, vorzugsweise von 2 bis 8, ist; und R₂ eine Phenylgruppe oder eine monosubstituierte Phenylgruppe ist;
R₂ vorzugsweise ausgewählt ist unter Phenyl, 4-Fluorphenyl, 2-Fluorphenyl, 4-Chlorphenyl, 3-Chlorphenyl, 4-Bromphenyl und 4-Methylphenyl.

5. Lackierte Banknote nach einem vorhergehenden Anspruch, wobei das Lactam ausgewählt ist unter:

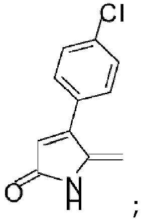

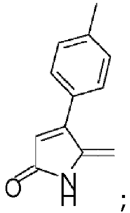

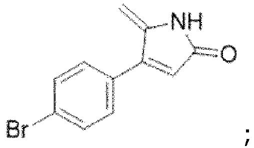

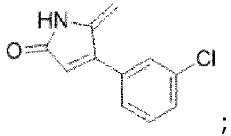

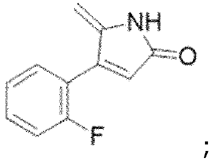

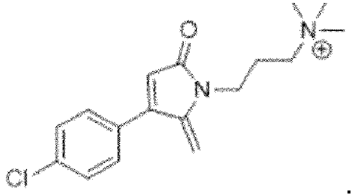

6. Lackierte Banknote nach einem vorhergehenden Anspruch, wobei das Lactam ausgewählt ist unter: 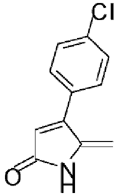 4-(4-Chlorphenyl)-5-methylen-pyrrol-2-on; oder 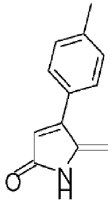 5-Methylen-4-(p-tolyl)pyrrol-2-on;
höchst bevorzugt ist das Lactam: 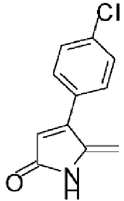 4-(4-Chlorphenyl)-5-methylen-pyrrol-2-on.

7. Lackierte Banknote nach einem vorhergehenden Anspruch, wobei das Lactam in eingekapselter Form vorliegt.

8. Lackierte Banknote nach einem der Ansprüche 1 bis 7, wobei der Lack ein Lack auf Wasserbasis oder ein UV-härtender Lack ist.

9. Lackierte Banknote nach einem vorhergehenden Anspruch, wobei die Banknote ein Material umfasst, das ausgewählt ist unter: einem cellulosehaltigen Substrat, vorzugsweise Baumwolle, oder Baumwolle in Vermischung mit Flachs, Abaca oder Eukalyptuszellstoff; einem Polymersubstrat, vorzugsweise Polypropylen; oder einem Kunststoffsubstrat.

10. Verwendung eines Lactams, um einer Banknote entweder antibiofilmische Eigenschaften zu verleihen oder das Biofilmwachstum auf einer Banknote zu hemmen.

11. Verwendung nach Anspruch 10, wobei das Lactam die Formel (I) oder (II) aufweist: 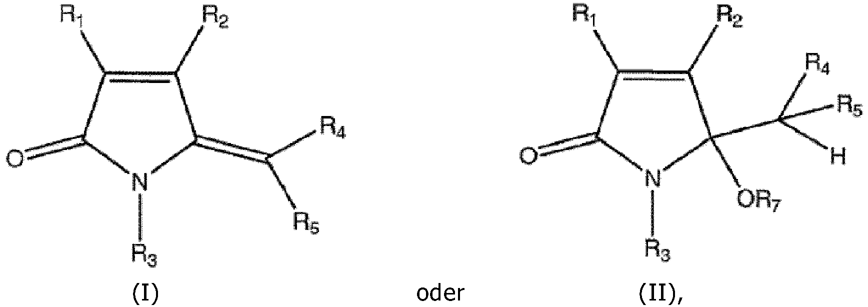 wobei:
R₁ und R₂ jeweils unabhängig voneinander ausgewählt sind unter Wasserstoff, Halogen, Alkyl, Cycloalkyl, Alkoxy, Oxoalkyl, Alkenyl, Heterocyclyl, Heteroaryl, Aryl und Arylalkyl und
R₃ ausgewählt ist unter Wasserstoff, Hydroxyl, Alkyl, Cycloalkyl, Alkoxy, Oxoalkyl, Alkenyl, Heterocyclyl, Heteroaryl, Cycloalkyl, Aryl, Arylalkyl, -C(O)CR₆=CH₂ und (CH₂)ₙN⁺(R^{a})₃,
wobei n eine ganze Zahl von 1 bis 16, vorzugsweise von 2 bis 8, ist und wobei jedes R^{a} unabhängig voneinander H oder C₁₋₄-Alkyl ist;
R₄ und R₅ unabhängig voneinander ausgewählt sind unter Wasserstoff, Aryl, Heterocyclyl, Heteroaryl und Arylalkyl; und
R₆ ausgewählt ist unter Wasserstoff und Methyl; und
R₇ ausgewählt ist unter Wasserstoff und -C(O)CR₆=CH₂; und
mindestens einer der Reste R₄ und R₅ vorzugsweise Wasserstoff ist.

12. Verwendung nach Anspruch 11, wobei im Lactam der Formel (I) oder (II) R₁, R₄ und R₅ H sind; R₃ H oder (CH₂)ₙN⁺(CH₃)₃ ist, wobei n eine ganze Zahl von 1 bis 16, vorzugsweise von 2 bis 8, ist; und R₂ eine Phenylgruppe oder eine monosubstituierte Phenylgruppe ist; vorzugsweise R₂ ausgewählt ist unter Phenyl, 4-Fluorphenyl, 2-Fluorphenyl, 4-Chlorphenyl, 3-Chlorphenyl, 4-Bromphenyl und 4-Methylphenyl.

13. Verwendung nach Anspruch 10, wobei das Lactam ein Lactam ist, ausgewählt unter: 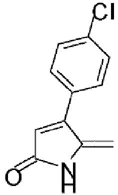 4-(4-Chlorphenyl)-5-methylen-pyrrol-2-on; und 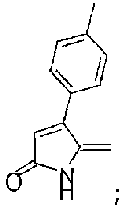 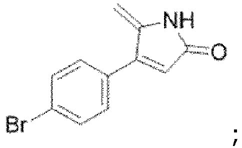 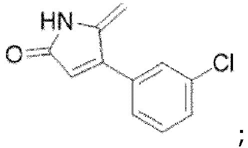 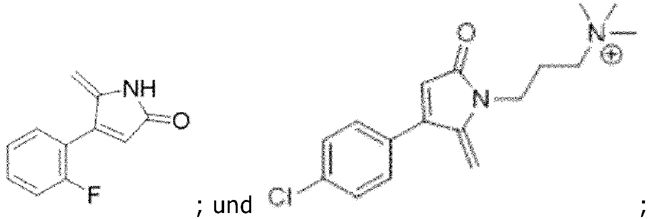
wobei das Lactam vorzugsweise ist: 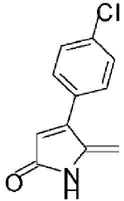 4-(4-Chlorphenyl)-5-methylen-pyrrol-2-on; oder 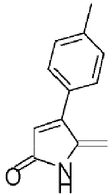 5-Methylen-4-(p-tolyl)pyrrol-2-on
wobei das Lactam höchst bevorzugt ist: 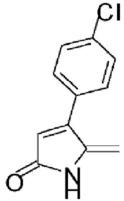 4-(4-Chlorophenyl)-5-methylen-pyrrol-2-on ist.

## Revendications

1. Billet de banque verni comprenant de 0,0015 à 2,5 % en poids d'un lactame.

2. Billet de banque verni selon la revendication 1, dans lequel le lactame est présent à un niveau de 0,0015 à 1 % en poids, de préférence à des niveaux de 0,0015 à 0,5 % en poids, plus préférentiellement de 0,05 à 0,5 % en poids, et de préférence maximale de 0,05 à 0,1 % en poids.

3. Billet de banque verni selon la revendication 1 ou la revendication 2, dans lequel le lactame est de formule (I) ou (II) : 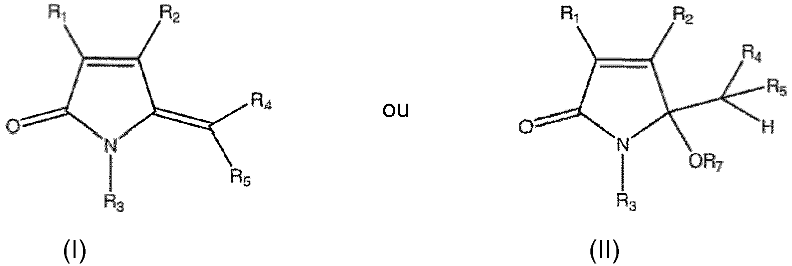 dans lesquelles :
R₁ et R₂ sont chacun indépendamment choisis parmi hydrogène, halogène, alkyle, cycloalkyle, alcoxy, oxoalkyle, alcényle, hétérocyclyle, hétéroaryle, aryle et aralkyle ; et
R₃ est choisi parmi hydrogène, hydroxyle, alkyle, cycloalkyle, alcoxy, oxoalkyle, alcényle, hétérocyclyle, hétéroaryle, cycloalkyle, aryle, aralkyle, -C(O)CR₆=CH₂, et (CH₂)ₙN⁺(R^{a})₃, où n est un entier de 1 à 16, de préférence de 2 à 8, et où chaque R^{a} est indépendamment H ou alkyle en C₁₋₄ ;
R₄ et R₅ sont indépendamment choisis parmi hydrogène, aryle, hétérocyclyle, hétéroaryle et arylalkyle ; et
R₆ est choisi parmi hydrogène et méthyle ; et
R₇ est choisi parmi hydrogène et -C(O)CR₆=CH₂ ; et
de préférence, au moins l'un de R₄ et R₅ est hydrogène.

4. Billet de banque verni selon la revendication 3, dans lequel, dans le lactame de formule (I) ou (II), R₁, R₄ et R₅ sont H ; R₃ est H, ou (CH₂)ₙN⁺(CH₃)₃, où n est un entier de 1 à 16, de préférence de 2 à 8 ; et R₂ est un groupe phényle, ou un groupe phényle monosubstitué ; de préférence R₂ est choisi parmi phényle, 4-fluorophényle, 2-fluorophényle, 4-chlorophényle, 3-chlorophényle, 4-bromophényle et 4-méthylphényle.

5. Billet de banque verni selon l'une quelconque des revendications précédentes, dans lequel le lactame est un lactame choisi parmi :

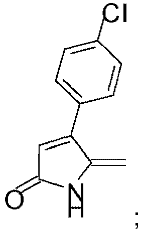

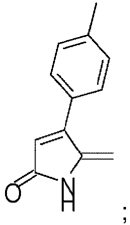

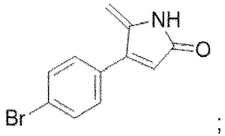

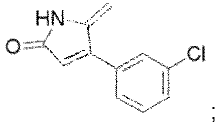

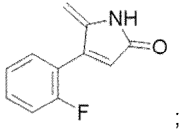

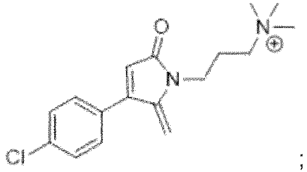

6. Billet de banque verni selon l'une quelconque des revendications précédentes, dans lequel le lactame est choisi parmi : 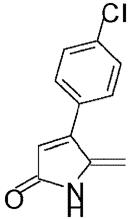 4-(4-chlorophényl)-5-méthylène-pyrrol-2-one ; ou 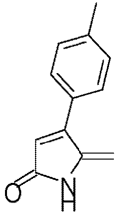 5-méthylène-4-(p-tolyl)pyrrol-2-one ; de préférence, le lactame est : 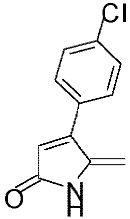 4-(4-chlorophényl)-5-méthylène-pyrrol-2-one.

7. Billet de banque verni selon l'une quelconque des revendications précédentes, dans lequel le lactame est sous forme encapsulée.

8. Billet de banque verni selon l'une quelconque des revendications 1 à 7, dans lequel le vernis est un vernis à base d'eau ou un vernis à séchage aux ultraviolets.

9. Billet de banque verni selon l'une quelconque des revendications précédentes, lequel billet de banque comprend un matériau choisi parmi : substrat cellulosique, de préférence coton, ou coton en mélange avec du lin, de l'abaca ou de la pâte d'eucalyptus ; substrat polymère, de préférence polypropylène ; ou substrat plastique.

10. Utilisation d'un lactame pour conférer des propriétés anti-biofilm à un billet de banque, ou pour inhiber la croissance de biofilm sur un billet de banque.

11. Utilisation selon la revendication 10, dans laquelle le lactame est de formule (I) ou (II) : 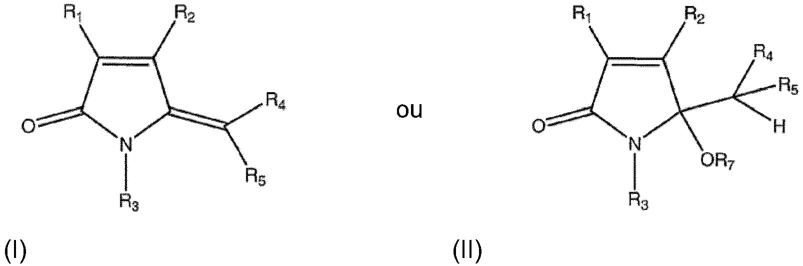 dans lesquelles :
R₁ et R₂ sont chacun indépendamment choisis parmi hydrogène, halogène, alkyle, cycloalkyle, alcoxy, oxoalkyle, alcényle, hétérocyclyle, hétéroaryle, aryle et aralkyle ; et
R₃ est choisi parmi hydrogène, hydroxyle, alkyle, cycloalkyle, alcoxy, oxoalkyle, alcényle, hétérocyclyle, hétéroaryle, cycloalkyle, aryle, aralkyle, -C(O)CR₆=CH₂, et (CH₂)ₙN⁺(R^{a})₃, où n est un entier de 1 à 16, de préférence de 2 à 8, et où chaque R^{a} est indépendamment H ou alkyle C₁₋₄ ;
R₄ et R₅ sont indépendamment choisis parmi hydrogène, aryle, hétérocyclyle, hétéroaryle et arylalkyle ; et
R₆ est choisi parmi hydrogène et méthyle ; et
R₇ est choisi parmi hydrogène et -C(O)CR₆=CH₂ ; et
de préférence, au moins l'un de R₄ et R₅ est hydrogène.

12. Utilisation selon la revendication 11, dans laquelle, dans le lactame de formule (I) ou (II), R₁, R₄ et R₅ sont H ; R₃ est H, ou (CH₂)ₙN⁺(CH₃)₃, où n est un entier de 1 à 16, de préférence de 2 à 8 ; et R₂ est un groupe phényle, ou un groupe phényle monosubstitué ; de préférence R₂ est choisi parmi phényle, 4-fluorophényle, 2-fluorophényle, 4-chlorophényle, 3-chlorophényle, 4-bromophényle et 4-méthylphényle.

13. Utilisation selon la revendication 10, dans laquelle le lactame est un lactame choisi parmi : 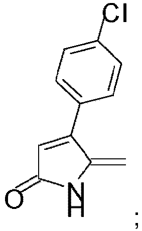 4-(4-chlorophényl)-5-méthylène-pyrrol-2-one ; et 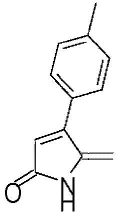 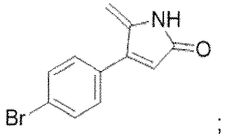 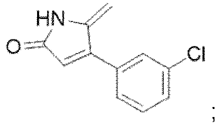 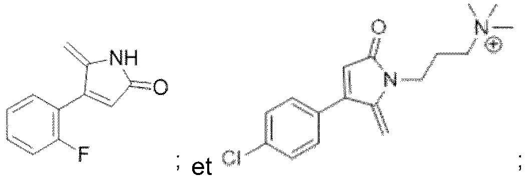
dans lequel le lactame est de préférence : 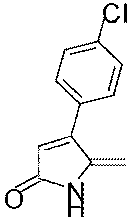 4-(4-chlorophényl)-5-méthylène-pyrrol-2-one ; ou 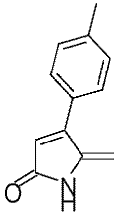 5-méthylène-4-(p-tolyl)pyrrol-2-one ;
dans lequel le lactame est de préférence maximale : 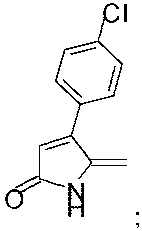 4-(4-chlorophényl)-5-méthylène-pyrrol-2-one.
